(19) Europäisches Patentamt
European Patent Office
Office européen des brevets

(11) **EP 0 698 073 B1**

(12) **EUROPEAN PATENT SPECIFICATION**

(45) Date of publication and mention
of the grant of the patent:
**18.12.1996 Bulletin 1996/51**

(21) Application number: **94916943.7**

(22) Date of filing: **06.05.1994**

(51) Int Cl.6: **C10G 45/54**, B01J 29/04

(86) International application number:
**PCT/EP94/01474**

(87) International publication number:
**WO 94/26846 (24.11.1994 Gazette 1994/26)**

(54) **HYDROGENATION OF AROMATICS IN HYDROCARBONACEOUS FEEDSTOCKS**

HYDRIERUNG VON AROMATEN IN KOHLENWASSERSTOFF-EINSÄTZEN

HYDROGENATION D'AROMATIQUES DANS DES CHARGES D'ALIMENTATION CONTENANT
DES HYDROCARBURES

(84) Designated Contracting States:
**AT BE DE DK ES FR GB IT NL SE**

(30) Priority: **10.05.1993 NL 9300790**

(43) Date of publication of application:
**28.02.1996 Bulletin 1996/09**

(73) Proprietor: **Akzo Nobel N.V.**
**6824 BM Arnhem (NL)**

(72) Inventors:
• **HEINERMAN, Jacobus, Johannes, Leonardus**
**NL-1077 PG Amsterdam (NL)**

• **VOGT, Eelco, Titus, Carel**
**NL-3524 KW Utrecht (NL)**

(74) Representative: **Schalkwijk, Pieter Cornelis et al**
**AKZO NOBEL N.V.**
**Patent Department (Dept. APTA)**
**P.O. Box 9300**
**6800 SB Arnhem (NL)**

(56) References cited:
**EP-A- 0 519 573         WO-A-93/01884**
**WO-A-93/02157**

## Description

The invention relates to a process for the hydrogenation of aromatics in hydrocarbonaceous feedstocks. More particularly, the invention relates to a process for the catalytic hydrogenation of aromatics in feedstocks for diesel fuel and kerosine.

Diesel fuels and kerosine are commonly prepared by the cracking or hydrocracking/hydrodesulphurising of high-boiling feedstocks, such as vacuum gas oils and residues, with the aid of a cracking catalyst or a hydrocracking catalyst, and separating the resulting product into fractions if so required. However, in general the fraction thus obtained is suitable neither for use as a fuel as such, nor for addition to a "pool." This is because the fuel has to meet certain specifications, notably with respect to the aromatics content. Because it is both environmentally advisable and legally increasingly required, it will become ever more necessary to reduce the aromatics content of fuels such as diesel oils and kerosine.

In the prior art, the aromatics content of such fuels is generally reduced by means of catalytic hydrogenation. For instance, European patent application 0 303 332 describes a process for the hydrogenation of the aromatics in hydrocarbon oils with a catalyst comprising a Group VIII noble metal on a support which comprises a modified Y-zeolite having a unit cell size between 2,420 and 2,430 nm (24,20 to 24,30 Å), and a silica-alumina ratio of at least 25.

The problem accompanying the hydrogenation of aromatic compounds in feedstocks for diesel fuel and kerosine is the following. While the products resulting from the cracking or hydrocracking/hydrodesulphurisation and fractionation of high-boiling feedstocks generally have a boiling point which makes them suitable for use as diesel fuel or kerosine, at the same time their aromatics content is too high for this purpose. Thus, it is essential to reduce the aromatics content of these feedstocks without appreciably lowering their boiling point, in other words, to effect a reduction of the aromatics content without substantial hydrocracking.

The catalyst of European patent application 0 303 332 is stated to be suitable for reducing the aromatics content of feeds without effecting too much hydrocracking, but the need for catalysts able to effect the hydrogenation of aromatic compounds with even less hydrocracking continues.

Thus, it is an objective of the invention to provide a noble metal-containing catalyst which is able to effect a satisfactory hydrogenation of aromatic compounds in hydrocarbon feeds with even less hydrocracking than in the case of the catalyst described in European patent application 0 303 332.

The present invention attains this objective through providing a process for the hydrogenation of aromatics in a hydrocarbonaceous feedstock substantially boiling below 371°C wherein, at elevated temperature and in the presence of hydrogen, the feedstock is contacted with a hydrogenation catalyst comprising a group VIII noble metal and a zeolite under conditions at which substantially no cracking will occur, characterised in that the zeolite is an inorganic, crystalline, non-layered aluminosilicate with pores of more than 1,3 nm in diameter, which aluminosilicate after calcination has an X-ray diffraction pattern with at least one peak at a position greater than 1,8 nm d-spacing.

Further, it is expected that the noble metal-containing catalyst used in the process of the present invention will be less vulnerable to the sulphur-containing compounds in the feed than the known noble metal-containing catalysts based on other aluminosilicates.

### The catalyst

Examples of Group VIII noble metals suitable for use in the catalyst are rhodium, palladium, iridium, and platinum. Palladium and platinum are preferred, with platinum and a combination of platinum and palladium especially being preferred.

For a full description of the crystalline aluminosilicate, reference is made to International Patent Applications WO 91/11390 and 93/02159. These types of materials distinguish themselves from the known zeolites, such as Zeolite-Y and ZSM-5, by having larger pores; in particular, they have pores of an essentially uniform diameter in the range of 1,3 to 20 nm, preferably in the range of 1,8 to 10 nm. The benzene adsorption capacity, determined at 6,7 kPa and 25°C, is greater than 15 g of benzene per 100 g of calcined material.

The characteristic X-ray diffraction pattern of these aluminosilicates shows at least one peak at a position greater than 1,8 nm d-spacing (Cu-K alpha radiation). More particularly, the pattern will show at least two peaks at positions greater than 1 nm d-spacing, at least one of which is to be found at a position greater than 1,8 nm d-spacing.

The aluminosilicates' preparation may be as follows: the requisite amounts of a silica source, an alumina source, and a matrix compound are combined in water, and the resulting mixture is crystallised at a temperature in the range of 25° to 175°C, with care being taken to maintain the pH of the mixture at a value in the range of 9 to 14. As the occasion arises, an alkali metal source, a second matrix compound, or an additional organic adjuvant may be added to the crystallisation mixture.

The suitable silica sources include precipitated amorphous silica, amorphous silica prepared by flame hydrolysis, water glass, organic silicates, and crystalline inorganic silicates, such as synthetic or natural zeolites or synthetic or natural clays.

The suitable alumina sources include aluminium oxide, aluminoxyhydroxide, aluminium hydroxide, sodium aluminate, aluminium sulphate, aluminium nitrate, and organic aluminium compounds such as aluminium alkoxides.

The suitable matrix compounds include salts - preferably halides, hydroxides, silicates, or combinations thereof - containing ammonium ions or phosphonium ions - $R_1R_2R_3R_4Q^+$ - wherein Q represents phosphorus or nitrogen, $R_1$ represents an alkyl group having 6-36 carbon atoms, and $R_2$, $R_3$, and $R_4$ have the meaning of hydrogen or an alkyl group of 1-5 carbon atoms. The suitable alkali metal sources include the oxides or hydroxides of the elements of Groups IA and IIA, or compounds of these elements with silica or alumina, such as water glass or sodium aluminate. The compounds suitable for use as second matrix compounds include those which satisfy the formula for matrix compounds immediately above, except that this time $R_1$ also has the meaning of hydrogen or an alkyl group of 1-5 carbon atoms. The suitable organic adjuvants include aromatic hydrocarbons or amines having 5-20 carbon atoms, halogen- or $C_1$-$C_{14}$ alkyl-substituted derivatives thereof, cyclic and polycyclic hydrocarbons having 5-20 carbon atoms and halogen- or $C_1$-$C_{14}$ alkyl-substituted derivatives thereof, and, finally, branched and linear aliphatic hydrocarbons having 5-20 carbon atoms and halogen- or $C_1$-$C_{14}$ alkyl-substituted derivatives thereof.

After the crystallisation process the crystalline material is isolated, washed with water, dried, and, optionally, calcined at a temperature in the range of 400° to 750°C in an atmosphere of air and/or nitrogen.

If so desired, the crystalline material is subjected to an ammonium exchange in order to reduce its sodium content; in that case, the ammonium ions are converted into hydrogen ions in a subsequent calcining process ( e.g., the final calcination - see below).

The silica:alumina molar ratio of the crystalline aluminosilicate generally has a value from 2 to infinite, preferably in the range of 2 to 100.

Especially suitable is the aluminosilicate designated with the acronym MCM-41, the preparation of which is described in Example 22 of aforementioned International Patent Application W0 93/02159.

In general, it is advisable to incorporate a carrier material into the catalyst particles. Examples of suitable carrier materials are silica, alumina, silica-alumina, clays, and combinations thereof, preference being given to carrier materials of alumina, notably those composed for more than 90% of gamma-alumina.

The preparation of the catalyst may be by an otherwise known route, e.g., by first mixing the carrier material or, more precisely, a precursor thereof, with the aluminosilicate and then extruding the mixture, after which, with or without an intermediate calcination taking place, the extrudates are provided with a precursor of the hydrogenation metal, for instance chloroplatinic acid or $Pt(NH_3)_4(OH)_2$, by means of impregnation or ion exchange; with the thus obtained material then being subjected to a final calcination.

Prior to being used, the catalyst should further be subjected to a reduction in order to convert the noble metal to the metallic form. Such a reducing step may be carried out via an otherwise conventional route by treating the catalyst at elevated temperature with hydrogen or a gaseous mixture predominantly made up of hydrogen. The most practical course of action is for the reducing step to be carried out in the reactor in which the hydrogenation process according to the invention is also carried out.

As a rule, the amounts of the various catalyst components are as follows: 0,05 to 5 wt.%, preferably 0,1 to 2 wt.%, of hydrogenation metal (calculated as metallic element), 10 to 90 wt.%, preferably 20 to 80 wt.%, of aluminosilicate, and 90 to 10 wt.%, preferably 80 to 20 wt.%, of carrier material.

The catalyst particles may have many different shapes; generally, use is made of cylindrical particles and particles in the form of symmetric or asymmetric polylobes, for instance tri- and quadrulobes. The diameter usually amounts to 1 to 3 mm, the length to 3 to 10 mm. Alternatively, use may be made of pills, rings, and balls.

The typical physical properties of the catalyst include: an overall pore volume in the range of 0,5 to 1,5 ml/g (determined using nitrogen sorption and mercury porosimetry), a specific surface area in the range of 100 to 1000 m²/g (determined using the BET equation), and a pore distribution (determined with the Broekhoff-de Boer method, see, e. g., J.C.P. Broekhoff in "Preparation of Catalysts"; B. Delmon et al. (eds), Elsevier Amsterdam, 1979, vol II, p. 663) with one or more maxima in the range of 1,8 to 15 nm.

The feedstock

As was mentioned hereinbefore, the feedstock contains aromatics and will normally substantially boil at a temperature below 371°C.

The aromatics content as a rule tends to be at least 10% by volume. More particularly, feedstocks are envisaged which contain at least 20% by volume, and preferably at least 30% by volume, of aromatics; the upper limit of the aromatics content commonly is 50% by volume, but may go as high as 80% by volume.

What is meant by the feedstock substantially boiling below 371°C is that at least 90% by volume of the feedstock boils below said temperature. Preferably, a feedstock is employed which has a boiling range of from 140° to 371°C. Such feedstocks may be acquired by the conventional route from higher-boiling feedstocks by means of cracking or hydrocracking processes, optionally followed by fractionation of the cracking or hydrocracking products.

It is preferred to avoid feedstocks with too high sulphur and nitrogen contents, not only because such impurities are objectionable in the final product, but also because they may have a detrimental effect on the catalyst's action. In general, the sulphur content, calculated as S, is less than 0,05 wt.%, preferably less than 0,01 wt.%, and the nitrogen content, calculated as N, likewise is less than 0,05 wt.%, preferably less than 0,01 wt.% If the available feedstock contains a too high content of either or both of these impurities, it must be hydrodesulphurised/hydrodenitrogenated with a catalyst in an otherwise conventional manner. Such a pre-treatment is preferably carried out separately from the process according to the invention.

The process

The process according to the invention is carried out at a temperature in the range of 200° to 382°C. The overall pressure is in the range of 10 to 200 bar, the partial hydrogen pressure is in the range of 5 to 180 bar. The liquid hourly space velocity (LHSV) generally is in the range of 0,2 to 5 hours$^{-1}$.

The conditions selected should be such that substantially no cracking will occur. In the present context, conditions under which substantially no cracking will occur are defined as conditions under which less than 20 wt.% of the hydrocarbons in the feed with a boiling point above 196°C is converted to product hydrocarbons with a boiling point below 196°C. The conversion to products boiling below 196°C is given in the following formula:

$$\text{Conv. } 196°C\text{-(wt\%)} = \frac{(\text{wt. product } 196°C\text{-}) - (\text{wt. feed } 196°C\text{-})}{\text{wt. total feed}} \times 100\%$$

The degree to which the aromatics are hydrogenated in the process according to the invention in any given case is of course dependent on the nature of the catalyst, the nature of the feedstock, and the process conditions. Still, generally more than 15 vol.%, preferably more than 30 vol.%, and in particular more than 50 vol.%, of the aromatics present in the feedstock will be hydrogenated. The resulting product usually contains less than 30 vol.% of aromatics, preferably less than 20 vol.%, most preferably less than 5 vol.%.

Example 1

Preparation of the crystalline aluminosilicate

To 35,9 kg of a solution in water containing 28,3 wt.% of cetyltrimethylammonium chloride were added 1,30 kg of aluminium isopropoxide and 24,36 kg of demineralised water. The mixture was stirred overnight, after which the following were successively added: 5,14 kg of an aqueous solution containing 25 wt.% of tetramethylammonium hydroxide, 2,83 kg of tetraethyl orthosilicate, and 4,76 kg of precipitated silica (LOI 6%; VP-810®, ex Akzo-PQ Silica). The thus prepared crystallisation mixture was kept at a temperature of 90°C for 48 hours, after which the crystalline product was filtered off, washed with water, and dried at room temperature. A small portion was calcined at 600°C to determine its characteristics, which were as follows: the specific surface area was 819 m$^2$/g, the pore volume was 0,797 ml/g, and the average pore diameter was 36Å (all pore data was determined with reference to the N$_2$-desorption curve). The molar silica:alumina ratio was 24,9.

Example 2

Preparation of Catalyst A according to the invention

1173 grams of the product prepared in Example 1 were mixed with 1411 grams of pseudoboehmite alumina, 1800 grams of water, and 119 grams of 65% nitric acid. The mixture was kneaded and extruded to form extrudates with a diameter of 1,5 mm. The extrudates were heated to a temperature of 500 °C under nitrogen, and subsequently calcined in air for one hour.

100 grams of the above-prepared calcined extrudates were slurried in 600 ml of an aqueous Pt(NH$_3$)$_4$(OH)$_2$-solution containing 1,17 grams of Pt per litre. The slurry was maintained at 25°C for 22 hours, after which the remaining liquid was decanted. The impregnated extrudates were dried at 120°C, and subsequently calcined for 1 hour at 300°C in air.

The final product consisted of white extrudates containing 0,70 wt.% Pt.

Example 3

Preparation of Comparative Catalyst B

Example 2 was repeated, except that instead of the product prepared in Example 1 an equivalent amount (based on dry weight) of a commercially available modified Y zeolite with a unit cell size of 2,430 nm (24,30 Å) and a SAR of 30 (ex PQ Corporation, the Netherlands) was used.

The final product consisted of white extrudates containing 0,70 wt.% Pt.

Example 4

Testing of the diesel hydrogenation activity

The diesel hydrogenation activity of Catalyst A and of Comparative Catalyst B were tested using the following procedure.

100 ml of catalyst were loaded in a tubular reactor of 2 cm in diameter. The catalyst was activated by reduction in pure hydrogen at 480°C for three hours at 10 bar $H_2$ pressure. By this activation step the Pt was reduced to its metallic form. The catalyst was contacted with a feed of which the properties are specified below in Table 1, under the conditions specified in Table 2. The results are given in Table 3.

Table 1:

| Properties of the feed | | |
|---|---|---|
| Sulphur (ppmwt) | | 7 |
| Nitrogen (ppmwt) | | 5 |
| Density at 50°C (g/ml) | | 0,7905 |
| | | |
| IBP | 93 | |
| 10% | 186 | |
| 50% | 246 | |
| 90% | 302 | |
| FBP | 361 | |
| | | |
| Aromatics (wt%) | | |
| Mono | 16,9 | |
| Di | 1,0 | |
| Tri+ | 0,1 | |

In the above, Mono, Di, and Tri+ stand for mono-ringed aromatics, diringed aromatics, and aromatic compounds with three or more rings, respectively.

Table 2:

| Test conditions | |
|---|---|
| Temperature (°C) | 220 |
| Pressure (bar) | 30 |
| $H_2$/oil ratio (Nl/l) | 712 |
| LHSV (hour$^{-1}$) | 2,0 |

Table 3:

| Results | | |
|---|---|---|
| | Catalyst A | Catalyst B (comp.) |
| Aromatics cont. of product (wt.%) | 0,9 | 0,4 |
| Conv. 196°C- (wt.%) | 3,5 | 11,3 |

It appears that both Catalyst A, which is a catalyst according to the invention, and Catalyst B, which is a comparative catalyst according to EP-A 0 303 332, have reduced the aromatics content of the feed to below 1,0 wt.%, a value which is highly suitable for hydrocarbon products to be used as fuels or in fuel pools. However, in the case of the comparative catalyst this was accompanied by a conversion to hydrocarbons boiling below 196°C of 11,3 wt.%, while for the catalyst according to the invention the conversion to hydrocarbons boiling below 196°C was only 3,5 wt.%. It can thus be concluded that the use of Catalyst A according to the invention results in a higher yield of fuel than the use of the comparative catalyst B, while at the same time a satisfactory reduction of the aromatics content is achieved.

## Claims

1. A process for the hydrogenation of aromatics in a hydrocarbonaceous feedstock substantially boiling below 371°C wherein, at elevated temperature and in the presence of hydrogen, the feedstock is contacted with a hydrogenation catalyst containing a Group VIII noble metal and an aluminosilicate under conditions at which substantially no cracking will occur, characterised in that the aluminosilicate present in the catalyst is an inorganic, crystalline, non-layered aluminosilicate with pores having diameters greater than 1,3 nm, and exhibiting, after calcination, an X-ray diffraction pattern with at least one peak at a position greater than 1,8 nm d-spacing.

2. A process according to claim 1, wherein the Group VIII noble metal is platinum or a mixture of platinum and palladium.

3. A process according to either of the preceding claims, wherein the aluminosilicate is MCM-41.

4. A process according to any one of the preceding claims, wherein the catalyst comprises 0,1-2 wt.% of Group VIII noble metal (calculated as metallic element), 20-80 wt.% of aluminosilicate, and 80-20 wt.% of carrier material.

## Patentansprüche

1. Verfahren zum Hydrieren von aromatischen Anteilen in einer Kohlenwasserstoffspeisung, die im wesentlichen unter 371°C siedet, bei erhöhter Temperatur und in Gegenwart von Wasserstoff, wobei die Speisung unter Bedingungen, bei welchen praktisch kein Kracken erfolgt, mit einem Hydrierkatalysator in Kontakt gebracht wird, der ein Edelmetall der Gruppe VIII und ein Aluminiumsilicat enthält, dadurch gekennzeichnet, dass das im Katalysator vorhandene Aluminiumsilicat ein anorganisches, kristallines, nicht geschichtetes Aluminiumsilicat mit Poren ist, die Durchmesser von grösser als 1,3 nm haben, und das nach dem Kalzinieren ein Röntgenbeugungsmuster mit mindestens einem Peak in einer Position zeigt, die grösser als der 1,8 nm d-Abstand ist.

2. Verfahren nach Anspruch 1, bei welchem das Edelmetall der Gruppe VIII Platin oder eine Mischung von Platin oder Palladium ist.

3. Verfahren nach einem der vorangehenden Ansprüche, bei welchem das Aluminiumsilicat MCM-41 ist.

4. Verfahren nach einem der vorangehenden Ansprüche, bei welchem der Katalysator 0,1-2 Gew.% Edelmetall der Gruppe VIII (berechnet als metallisches Element), 20-80 Gew.% Aluminiumsilicat und 80-20 Gew.% Trägermaterial enthält.

## Revendications

1. Un procédé d'hydrogénation des aromatiques dans une charge hydrocarbonée bouillant sensiblement à une température inférieure à 371°C dans lequel, à une température élevée et en présence d'hydrogène, la charge est mise en contact avec un catalyseur d'hydrogénation contenant un métal noble du groupe VIII, et un aluminosilicate dans des conditions auxquelles sensiblement aucun craquage n'a lieu, caractérisé en ce que l'aluminosilicate présent dans le catalyseur est un aluminosilicate non stratifié, cristallin, inorganique, dont le diamètre des pores est supérieur à 1,3 nm, et présentant, après calcination, un spectre de diffraction aux rayons-X comportant au moins un pic en une position supérieure à une distance interplanaire-d de 1,8 nm.

2. Un procédé selon la revendication 1, dans lequel le métal noble du groupe VIII est le platine ou un mélange de platine et de palladium.

3. Un procédé selon l'une quelconque des revendications précédentes, dans lequel l'alumino-silicate est le MCM-41.

4. Un procédé selon l'une quelconque des revendications précédentes, dans lequel le catalyseur comprend 0,1-2% en poids d'un métal noble du groupe VIII (exprimé en élément métallique), 20 à 80% en poids d'aluminosilicate, et 80 à 20% en poids de matériau support.